# EUROPÄISCHE PATENTSCHRIFT

(11) **EP 2 284 106 B1**
(45) Veröffentlichungstag und Bekanntmachung des Hinweises auf die Patenterteilung: **21.12.2011**
(21) Anmeldenummer: 09010297.1
(22) Anmeldetag: 10.08.2009
(51) Int. Cl.: B65G 53/22, B65G 67/60, B63B 27/24

(54) **Entladeanlage für tiefliegende Lagerbunker**
Unloading assembly for low lying storage bunker
Installation de décharge pour compartiment de stockage en profondeur

(43) Veröffentlichungstag der Anmeldung: 16.02.2011
(73) Patentinhaber: Claudius Peters Projects GmbH, 21614 Buxtehude (DE)
(72) Erfinder: Hilgraf, Peter, 22149 Hamburg (DE); Reismann, Ansgar, 21683 Stade (DE); Frühling, Reiner, 21035 Hamburg (DE)
(74) Vertreter: Glawe, Delfs, Moll

(56) Entgegenhaltungen:
- WO-A1-2007/142534
- DE-B- 1 262 899

## Beschreibung

Die Erfindung betrifft eine Entladeanlage für tiefliegende Lagerbunker, mit einer Zufuhrkammer zur bodennahen Versorgung mit Gut aus den Lagerbunkern und einem Vertikalförderer zum Heben des Guts auf ein decknahes Niveau mit einem Abförderende, an das eine Abtransportleitung zum Wegfördern des Guts zu einer räumlich entfernten Abgabestelle anschließbar ist.

Tiefliegende große Gefäße zur Lagerung von Gut, insbesondere tiefliegende Silos oder Bunker, wie sie typisch sind für Schiffsladeräume, erfordern eine besondere Anlage zur Entladung. Zu diesem Zweck sind an dem Boden des Laderaums Einrichtungen vorgesehen, welche das Gut von dort abführen und zu einer Zufuhrkammer für eine zentrale Hubeinrichtung fördern. Diese befördert das aus den Bunkern angeförderte Schüttgut auf ein höheres Niveau, das bei Schiffen etwa dem Decksniveau bzw. der Oberkante des Bunkers oder Silos entspricht.

Das Dokument WO2007142534 offenbart eine Entladevorrichtung für tiefliegende Lagerbunker gemäß dem Oberbegriff des Anspruchs 1.

Es ist bekannt, zur Förderung des Guts vom Boden der Bunker zu der zentralen Stelle Fluidisierböden zu verwenden, und an der zentralen Stelle das Gut über eine vertikal angeordnete Förderschnecke auf das Decksniveau zu heben, von wo es über eine pneumatische Fördereinrichtung abtransportiert werden kann (DE 12 62 899 B). Ein Nachteil dieser bekannten Anlage besteht darin, dass sie einen nur geringen Durchsatz aufweist, wodurch sich lange Entladezeiten ergeben. Insbesondere bei Schiffen führt dies wegen der Liegegebühren zu beträchtlichen Kosten.

Es ist daher eine Aufgabe der vorliegenden Erfindung, eine verbesserte Förderanlage zu schaffen, welche diesen Nachteil vermeidet oder zumindest verringert.

Die erfindungsgemäße Lösung liegt in den Merkmalen des unabhängigen Anspruchs. Vorteilhafte Weiterbildungen sind Gegenstand der abhängigen Ansprüche.

Bei einer Entladevorrichtung für tiefliegende Lagerbunker mit einer Zufuhrkammer zur bodennahen Zuführung von Gut aus Lagerbunkern und einer Hebeeinrichtung zum Heben des Guts auf ein Hochniveau mit einem Abförderende, an das eine Abtransportleitung zum Wegfördern des Guts zu einer räumlich entfernten Abgabestelle anschließbar ist, ist erfindungsgemäß vorgesehen, dass die Hebeeinrichtung ein Druckgefäß mit darin angeordnetem Vertikalförderer und Ausschubrohr umfasst, wobei der Vertikalförderer in der Zufuhrkammer beginnt und im oberen Bereich des Druckgefäßes endet, und das Ausschubrohr im unteren Bereich des Druckgefäßes beginnt und oben aus dem Druckgefäß führt, und eine Bespannungseinrichtung vorgesehen ist, die über ein erstes Ventil das Druckgefäß mit Druck beaufschlagt und über ein zweites Ventil eine Förderluftdüse des Ausschubrohrs betätigt, und weiter eine Steuerung vorgesehen ist, die dazu ausgebildet ist, das Druckgefäß mittels des Vertikalförderers zu befüllen und mittels der Bespannungseinrichtung das Gut zu fluidisieren und über die Abtransportleitung wegzufördern. Indem die Bespannungseinrichtung so ausgebildet ist, dass nicht nur zum Ausschieben des Guts, sondern auch zum Fluidisieren dient, kann eine schnelle und effiziente Abfuhr des Guts aus dem Druckgefäß erreicht werden. Dank dieser Effizienz genügt zum Betrieb ein anlageneigener Verdichter, so dass die erfindungsgemäße Entladeanlage nicht auf Unterstützung durch externe Aggregate angewiesen ist. Dies ist insbesondere für Schiffsanwendungen ein beträchtlicher Vorteil, da somit keine Abhängigkeit von landseitiger Unterstützung mehr besteht.

Kern der Erfindung ist der Gedanke, die Hubfunktion (von dem tiefliegenden Lagerbunker) und die Streckenförderfunktion (z. B. den Transport vom Schiff an Land) mitineinander zu kombinieren, so dass beide Funktionen raumsparend in einem Gerät integriert sind. Dazu wird in dem Druckgefäß der Vertikalförderer mit dem Ausschubrohr verschachtelt. Hierbei sorgt der Vertikalförderer für eine ausreichende Vorlage von abzutransportierendem Schüttgut im Druckgefäß, aus dem das Schüttgut mittels der Bespannungseinrichtung fluidisiert und durch das Ausschubrohr abgefördert wird. Die Erfindung eröffnet so die Möglichkeit, den verwendeten Druck soweit zu erhöhen, um so ein einfaches und schnelleres Abtransportieren zu der räumlich entfernten Abgabestelle zu erreichen. Dank der Erfindung gelingt dies, ohne dafür die Abmessungen der zum Transport des Schüttguts verwendeten Einrichtungen und damit den Bauraumbedarf zu erhöhen. Insgesamt ergibt dies damit die Möglichkeit für eine raumsparende und gleichzeitig effizientere Entladeanlage.

Unter Hochniveau wird hier ein Niveau verstanden, das etwa der Höhe der Oberkante der Bunker entspricht (bei Schiffen auch als Decksniveau bezeichnet), mindestens aber der halben Höhe des Bunkers entspricht. Es sei angemerkt, dass der Begriff Bunker nicht nur auf tiefliegende Lagerbunker beschränkt ist, sondern auch Behälter von Hochlagern, wie Silos, umfasst.

Die Erfindung eignet sich weiter gut zur Nachrüstung. Es ist lediglich erforderlich, eine Hebeeinrichtung mit dem Druckgefäß, dem Vertikalförderer und die Steuerung gemäß der Erfindung vorzusehen, um so ohne Vergrößerung der horizontalen Vorfördereinrichtung eine schnellere Entladung der Bunker erreichen zu können.

Vorzugsweise ist der Vertikalförderer mit einer Trennwand vom Innenraum des Druckgefäßes abgeteilt. Darunter wird verstanden, dass der Vertikalförderer zumindest seitlich von dem Druckgefäß abgetrennt ist, so dass nur an seinem oberen Abwurfkopf eine Verbindung zum Innenraum des Druckgefäßes besteht. Damit wird die Druckentkoppelung auch bei hohen Druckdifferenzen sichergestellt. Die Erfindung öffnet damit den Weg, die Förderung des Schüttguts aus dem tiefliegenden Lagerbunker sowohl im kontinuierlichen wie auch Wechselbetrieb zu erreichen.

Bei einer vorteilhaften Ausführungsform ist der Vertikalförderer als eine Förderschnecke mit vertikal ausgerichteter Achse ausgeführt. Mittels einer solchen Vertikalförderschnecke kann eine gut regelbare Befüllung des Druckgefäßes erreicht werden. Weiter bietet sie den Vorteil, dass mit dem zwischen den Gängen der Schnecke befindlichen Gut eine wirksame Abdichtung des Druckgefäßes von der Zufuhrkammer und damit von den Bunkern erreicht werden kann. Dabei ist der Antrieb der Förderschnecke außerhalb des Druckgefäßes angeordnet.

Die Steuerung ist vorzugweise auf einen chargenweisen Betrieb des Druckgefäßes ausgelegt. Dies bedeutet, dass in einem ersten Arbeitszyklus das Druckgefäß über die Vorfördereinrichtung mit Gut aus den Bunkern befüllt wird, und in einem anschließenden zweiten Arbeitszyklus das Gut fluidisiert und über die Abtransporteinrichtung ausgetrieben wird. Dank der erfindungsgemäßen Ausführung des Vertikalförderers mit dem Druckgefäß ist aber auch ein kontinuierlicher Betrieb möglich. Zweckmäßigerweise kann die Steuerung daher auch zu einem solchen Betrieb ausgelegt sein. Mit einer Auslegung auf den kontinuierlichen Betrieb bietet die Steuerung die Möglichkeit, schnellere Entladezeiten zu erreichen. Dies ist insbesondere dann ein Vorteil, wenn Entladevorgänge möglichst schnell durchgeführt werden sollen, weil dafür benötigte Ressourcen knapp und/oder teuer sind, wie Liegeplätze für Schiffe am Kai.

Bei einer alternativen Ausführungsform ist vorgesehen, dass der Vertikalförderer analog einem Airlift mit Vertikalstromrohr und einer darunter angeordneten Hubluftdüse ausgeführt ist. Die Hubluftdüse ist hierbei in der Regel koaxial unterhalb des Vertikalstromrohrs angeordnet. Durch die Düse strömendes Gas wird damit in das Vertikalstromrohr gerichtet, wobei es umgebendes Gut mitreißt und dieses im Vertikalstromrohr nach oben transportiert, um es an dessen oberen Ende abzuwerfen. Die Ausführung mit einem solchen Airlift bietet den Vorteil einer verschleißarmen Förderung, wobei kein bewegliches Element in dem Gut selbst angeordnet ist. Dies ist insbesondere bei verschleißträchtigem Gut, wie Kohle oder Zement, ein erheblicher Vorteil.

Bei einer bewährten Ausführungsform ist ein zusätzlicher Rückschlagwächter vorgesehen, der dazu ausgebildet ist, bei zu niedrigem Gutstand in gewissen Bunkern diese über ein Ventil abzukoppeln. Damit wird verhindert, dass bei weitgehend entleertem Bunker der Druck über die Vorförderleitung in den entleerten Bunker entweicht.

Die Steuerung ist vorzugsweise versehen mit Füllstandssensoren für einen Vollzustand und vorzugsweise auch für einen Leerzustand des Druckgefäßes. Zweckmäßigerweise sind weiter Drucksensoren für einen Hochdruck und einen Niederdruck im Druckgefäß vorgesehen.

Gemäß einer bevorzugten Ausführungsform kann die erfindungsgemäße Entnahmevorrichtung als Zwillingsanlage mit mindestens einer weiteren Hebeeinrichtung ausgebildet sein. Dazu ist eine Umschalteinheit vorgesehen ist, die mit der Steuerung derart zusammenwirkt, dass eine der Hebeeinrichtungen mit dem Gut befüllt wird während aus der anderen das Gut abgefördert wird. Damit wird erreicht, dass auch in den Zeiträumen, in denen eine der Hebeeinrichtungen befüllt wird, weiter abgefördert wird, nämlich über die andere Hebeeinrichtung. Obwohl die einzelnen Hebeeinrichtungen chargenweise betrieben werden, entsteht so ein quasikontinuierlicher Betrieb. Es sei angemerkt, dass hierfür mindestens zwei Hebeeinrichtungen benötigt werden, aber auch mehr vorgesehen sein können. Unter den Begriff "Zwillingsanlage" sollen also auch Ausführungen mit mehreren Hebeeinrichtungen fallen.

Die Erfindung wird nachfolgend unter Bezugnahme auf die beigefügte Zeichnung erläutert, in der vorteilhafte Ausführungsbeispiele dargestellt sind. Es zeigen:
- Fig. 1:: eine Gesamtansicht des Ausführungsbeispiels für eine erfindungsgemäße Entladevorrichtung;
- Fig. 2:: eine schematische Darstellung eines weiteren Aus- führungsbeispiels; .
- Fig. 3:: eine Detailansicht der Hebeeinrichtung gemäß dem in Fig. 1 dargestellten Ausführungsbeispiel;
- Fig. 4:: einen Ablaufplan für eine Entladevorrichtung mit einer Hebeeinrichtung gemäß Fig. 3;
- Fig. 5:: eine Detailansicht für ein anderes Ausführungs- beispiel der Hebeeinrichtung; und
- Fig. 6:: einen Ablaufplan für eine Entladevorrichtung mit einer Hebeeinrichtung gemäß Fig. 5.

Die Erfindung wird nachfolgend anhand eines Ausführungsbeispiels erläutert, das eine Entladevorrichtung für Bunker von Schiffen darstellt.

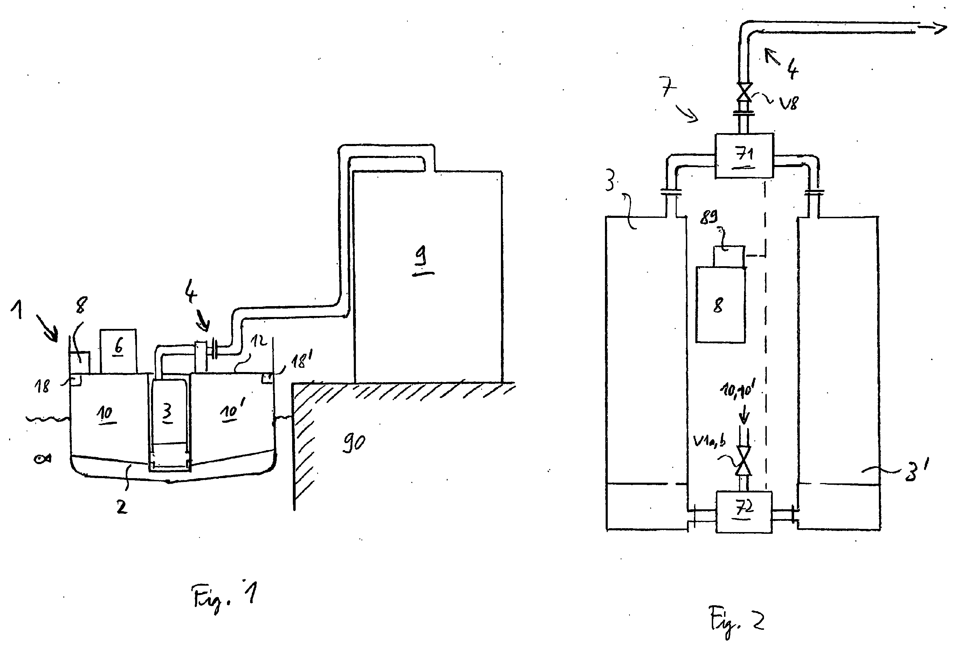

Eine Übersichtsdarstellung ist in Fig. 1 dargestellt. Die Anlage umfasst mehrere Lagerbunker 10, 10' in einem Schiff 1, welches über die erfindungsgemäße Entladevorrichtung, die nachfolgend näher beschrieben wird, entladen wird.

Zum Befördern des Guts aus den Bunkern 10, 10' zu der Entladevorrichtung ist eine Vorfördereinrichtung 2 vorgesehen. Sie ist als Niederflureinrichtung ausgelegt und umfasst Fluidisierböden in den Bunkern 10, 10'. Die Entladevorrichtung dient zum Heben des Guts vom Bodenniveau der Bunker 10, 10' auf das Niveau des Decks 12 des Schiffes 1, von wo es über eine Abtransportleitung 4 zu einem Silo 9 befördert wird, das landfest in der Nähe eines Kais 90 angeordnet ist.

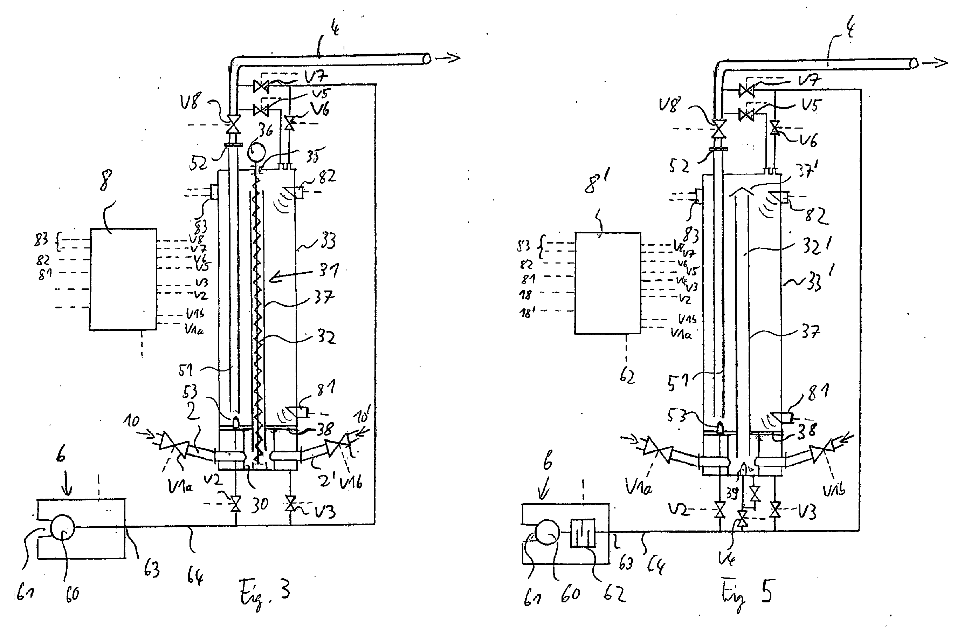

Kernstück der erfindungsgemäßen Hebeeinrichtung 3 ist ein Druckgefäß 33 mit einer Verdichteranlage 6 und eine entsprechend angepasste Steuerung 8. Dies ist in Fig. 3 näher dargestellt.

Das Druckgefäß 33 umfasst an seinem unteren Ende eine Zufuhrkammer 30, in der die Niederflurvorfördereinrichtung 2 aus den Bunkern 10, 10' mündet. Sie dient als Vorlage für das Schüttgut. Weiter weist sie eine Durchbrechung am oberen Ende auf, durch welche ein Vertikalförderer 31 geführt ist. Der Vertikalförderer 31 ist in dem dargestellten Ausführungsbeispiel in Fig. 3 mit einer Vertikalförderschnecke 32 versehen. Die Vertikalförderschnecke 32 erstreckt sich über den größten Teil der Höhe des Druckgefäßes 33. Die Vertikalförderschnecke 32 erstreckt sich im Wesentlichen zentral entlang der Mittelachse durch das Druckgefäß 33 und ist mit ihrem Antriebsschaft mittels einer Dichtung 35 durch die Decke des Druckgefäßes 33 geführt, wo ein Antriebsmotor 36 angeordnet ist. Die Vertikalförderschnecke 32 ist über einen Großteil ihrer Länge, genauer gesagt bis zu etwa 9/10 der Höhe des Druckgefäßes 33, von einem Mantelrohr 37 umgeben. Damit wird erreicht, dass von der Vertikalförderschnecke 32 gefördertes Gut am oberen Ende des Mantelrohrs 37, also auf etwa 9/10 der Höhe des Druckgefäßes 33, abgeworfen wird.

Parallel gegenläufig zu dem Vertikalförderer 31 ist ein Ausschubrohr 51 in dem Druckgefäß 33 angeordnet. Es führt in dem dargestellten Ausführungsbeispiel einstückig von einem Anschlussstück etwas oberhalb des Deckels des Druckgefäßes 33 durch den Deckel hindurch nach unten bis knapp über dem Boden des Druckgefäßes 33. Das Ausschubrohr 51 ist an seinem unteren Ende offen. Das obere, außerhalb des Druckgefäßes 33 liegende Ende des Ausschubrohrs 51 bildet das Abförderende 52 der Hebeeinrichtung 3. Hieran angeschlossen ist die Abtransportleitung 4. Unterhalb des Ausschubrohrs 51 ist am Boden des Druckgefäßes 33, der als ein Fluidisierboden 38 ausgeführt ist, eine Förderluftdüse 53 angeordnet. Ihr kann Förderluft zugeführt werden, wie nachfolgend noch näher beschrieben werden wird.

Weiter ist eine Verdichteranlage 6 vorgesehen, welche mittels eines Kompressors 60 über einen Luftansaugtrichter 61 angesaugte Luft und mittels einer optionalen Steuerblende 62 an einem Ausgang 63 Druckluft bereitstellt. Mit ihr wird über ein in seiner Gesamtheit mit der Bezugsziffer 64 bezeichnetes Luftverteilungsnetz die Hebeeinrichtung 3 mit Druckgas versorgt; ggf. kann auch die Vorfördereinrichtung 2 bei Bedarfversorgt werden, üblicherweise wird hierfür aber ein eigenes Gebläse (nicht dargestellt) vorgesehen sein. Weiter ist eine Mehrzahl von steuerbaren Ventilen vorgesehen, welche nachfolgend erläutert werden. Die Druckleitung des Luftverteilungsnetzes 64 ist über ein Ventil V2 mit der Förderluftdüse 53 und über ein Ventil V3 mit einem die Zufuhrkammer 30 umgebenden Unterraum verbunden. Weiter ist sie über ein Ventil V6 mit einem an der Decke des Druckgefäßes 33 angeordneten Bespannungsventil verbunden, und außerdem über ein Ventil V7 mit der Abtransportleitung 4. Weiter sind Ventile V1a, V1b vorgesehen, welche die Zufuhr des Guts aus dem Bunker 10, 10' über die Vorfördereinrichtung 2 in die Zufuhrkammer 30 steuern. In dem Bereich des Abförderendes 52 ist ein Abförderventil V8 vorgesehen.

Weiter sind an dem Druckgefäß 33 Höhensensoren 81, 82 für einen niedrigen und einen hohen Füllstand sowie ein kombinierter Drucksensor 83 angeschlossen, welcher Schalter für einen Maximaldruck und einen Minimaldruck aufweist. Die Sensoren 81 bis 83 sind angeschlossen an ein Steuergerät 8. Das Steuergerät 8 ist weiter dazu ausgebildet, die Ventile V1 bis V8 anzusteuern. Außerdem kontrolliert das Steuergerät 8 der Verdichteranlage 6.

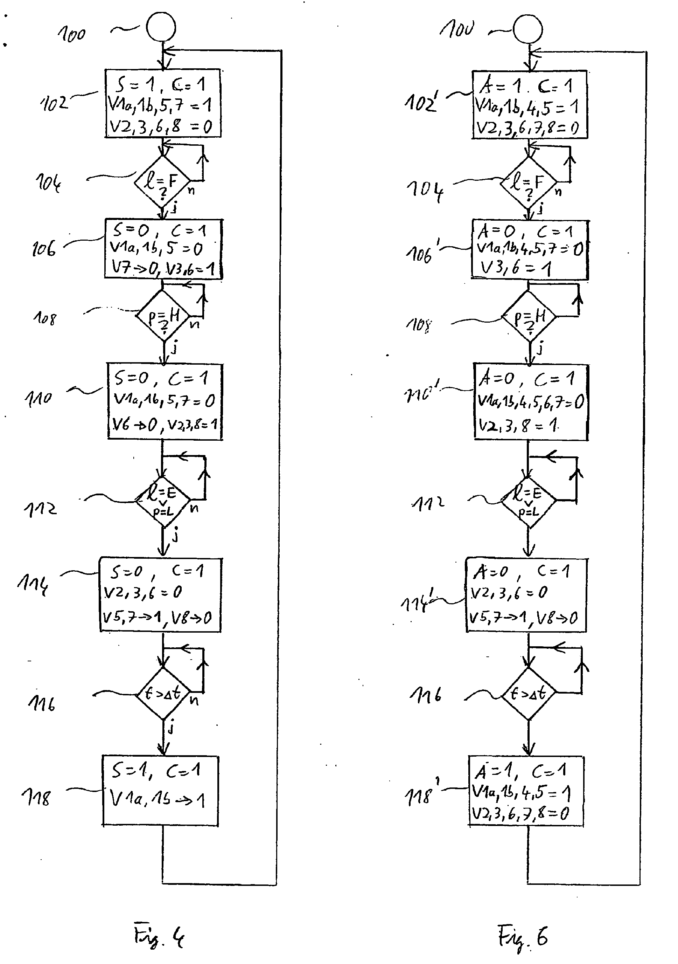

Der Betrieb der Entladevorrichtung als Einzelgefäß wird nachfolgend unter Bezugnahme auf Fig. 4 näher erläutert:

Zu Beginn des Entladeprozesses 100 sei das Druckgefäß 33 leer und drucklos. Der Entladevorgang wird begonnen, indem die Vorfördereinrichtung 2 Gut aus den Bunkern 10, 10' fördert. Dazu öffnet die Steuerung 8 in einem ersten Schritt 102 die Ventile V1a, V1b und schaltet die Schnecke 32 (S) ein ("Füllungsbetrieb"). Die Verdichteranlage 6 (C) läuft, um die Leitung 64 zur Versorgung der Druckventile mit Druck zu beaufschlagen. Außerdem geöffnet ist das Ventil V7, um die Förderleitung 40 weiter zu entleeren, sowie das Ventil V5, um das Druckgefäß 33 zur Abtransportleitung 4 hin zu entlüften. Die Steuerung 8 überwacht im nächsten Schritt 104, ob der obere Füllstandssensor 82 anzeigt, dass das Druckgefäß 33 nunmehr mit Gut (F) gefüllt ist. Ist dies der Fall, so schaltet die Steuerung 8 in einem Schritt 106 die Schnecke 32 aus, da das Druckgefäß 33 nunmehr gefüllt ist. Gleichzeitig werden die Ventile V1a und V1b sowie V5 geschlossen. Daraufhin wird ebenfalls das Ventil V7 geschlossen, und die Ventile V3 und V6 werden geöffnet, um das Druckgefäß 33 mit dem Druck auf der Druckleitung 64 zu beaufschlagen. Das Steuergerät 8 überwacht mittels des Drucksensors 83 in einem Schritt 108 das Erreichen einer oberen Druckschwelle H. Wird sie erreicht, schaltet das Steuergerät 8 in einem folgenden Schritt 110 zusätzlich zu den Ventilen V1a, V1b, V5 und V7 auch das Ventil V6 in die geschlossene Stellung und lässt den Schaltzustand der Schnecke 32 und der Verdichteranlage 6 unverändert. Damit wird weiter Fluidisierluft über das Ventil V3 und den Fluidiserboden 38 in das Druckgefäß 33 eingebracht, und durch das Ventil V2 wird Transportluft über eine Düse 53 eingeblasen, so dass das Gut in dem Ausschubrohr 51 aufsteigt und zum Abförderende 52 am oberen Rand des Aüsschubrohrs 51 gehoben wird, von wo es durch das geöffnete Ventil V8 über die Abtransportleitung 4 wegtransportiert wird ("Abförderbetrieb"). Der Abtransport läuft so lange, bis das Druckgefäß 33 entleert ist, angezeigt durch ein Signal des Füllstandssensors 81 für niedrigen Füllstand (E) oder angezeigt durch den Drucksensor 53, der eine untere Druckschwelle (L) erkennt. Erfolgt diese Prüfung in Schritt 112 mit positivem Ergebnis, wird in einem Schritt 114 der Abtransportvorgang beendet, indem die Ventile V2, V3 und V6 geschlossen werden und die Ventile V5 und V7 zur Belüftung des Druckgefäßes 33 bzw. zum Abtransport von Restfördermengen in der Abtransportleitung 4 geöffnet werden. Das Ventil V8 wird geschlossen. Nachdem eine Nachlaufzeit in Schritt 116 abgelaufen ist, wird der nächste Zyklus vorbereitet, indem die Vertikalförderschnecke 32 wieder gestartet wird, die Verdichteranlage 6 weiterläuft, und die Füllventile V1a, V1b geöffnet werden, woraufhin der Zyklus sich mit Schritt 102 fortsetzt.

Der vorstehend beschriebene chargenweise Betrieb kann durch eine modifizierte Steuerung zu einer kontinuierlichen Förderung verändert werden.

In Fig. 5 ist ein zweites Ausführungsbeispiel für die Hebeeinrichtung dargestellt. Es basiert auf dem in Fig. 3 dargestellten Ausführungsbeispiel, wobei gleiche Teile mit denselben Bezugsziffern bezeichnet sind. Der Unterschied liegt im Wesentlichen darin, dass anstelle der Vertikalförderschnecke 32 ein Airlift 32' vorgesehen ist. Dazu ist koaxial zu dem Mantelrohr des Vertikalförderers 31 eine Düse 39 am Grund der Zufuhrkammer 30 angeordnet, die über ein Ventil V4 an die Druckleitung 64 angeschlossen ist. Am oberen Ende des Mantelrohrs 37 des Vertikalförderers 32' ist ein dachförmig ausgeführtes Prallblech 37' vorgesehen, welches das Gas von dem Gut trennt. Die Steuerung 8' ist im Wesentlichen ähnlich zu der Steuerung 8 ausgebildet. Sie unterscheidet sich lediglich in Bezug auf ihre Steuereigenschaften hinsichtlich einiger Schritte, wie nachfolgend erläutert wird.

Bei dem in Fig. 6 dargestellten Ablaufplan handelt es sich um eine Variation des in Fig. 4 dargestellten Ablaufplans zu dem ersten Ausführungsbeispiel. Nach dem Start 100 wird in Schritt 102' durch Betätigen des Ventils V4 der Airlift 32' (A) eingeschaltet. Weiter wird die Verdichteranlage 6 (C) betrieben und die Ventile V1a, V1b, V4 und V5 sind geöffnet, während die Ventile V2, V3, V6 und V8 geschlossen sind. Weiter geschlossen ist im Unterschied zu dem ersten Ausführungsbeispiel das Ventil V7, um eine Entlüftung der für den Airlift 32' benötigten Druckgasleitung 64 zu vermeiden.

Nachdem im Schritt 104 das Erreichen des oberen Füllstands (F) geprüft wurde, wird im Schritt 106 durch Sperren des Ventils V4 der Airlift 32' gestoppt. Geöffnet werden nun die Ventile V3 und V6 zum Bespannen des Druckgefäßes 33 mit Druckgas. Nachdem im Schritt 108 überprüft wurde, dass die obere Druckschwelle H erreicht ist, wird im nächsten Schritt 110' das Ventil V6 geschlossen, und die Ventile V2 und V8 werden geöffnet, um Gut in dem Druckgefäß 33' über das Rohr 51 abzufördern. Wenn das Druckgefäß 33' hinreichend entleert ist, wie durch Absinken des Füllstands auf den unteren Grenzwert E oder Absinken des Drucks auf die untere Druckschwelle L signalisiert ist, werden die Ventile V2 und V3 im Schritt 114' geschlossen, die Ventile V5 und V7 werden nachfolgend geöffnet und das Ventil V8 wird ebenfalls geschlossen. Nachdem das Druckgefäß 33' nach Ablauf der Nachlaufzeit Δt belüftet ist, wird im nachfolgenden Schritt 118' eine erneute Befüllung vorbereitet. Dazu wird durch Schalten der Ventile V1a und V1b die Zufuhr aus den Förderbunkern 10, 10' freigegeben, über das Ventil V5 erfolgt ein Druckausgleich zur Abtransportleitung 4, und über das Ventil V4 wird der Airlift 32' in Betrieb genommen. Die Ventile V2, V3, V6, V7 und V8 sind geschlossen, und es beginnt mit Schritt 102' von neuem.

Die Erfindung erstreckt sich auch auf die Verfahren zum Fördern, wie vorstehend beschrieben.

An dem Steuergerät 8 sind Eingänge für die Sensoren 81, 82 und 83 des Druckgefäßes 33 vorgesehen. Weiter sind Eingänge für Füllstandssensoren 18, 18' in den Bunkern 10, 10' vorgesehen. Das Steuergerät 8 ermittelt anhand der von den Sensoren übermittelten Signale und einer integrierten Verarbeitungseinheit, in welcher der in Fig. 4 bzw. 6 dargestellte Ablaufplan implementiert ist, Schaltimpulse für die Ventile V1a bis V8 und die Verdichteranlage 6.

Eine weitere Ausführungsform ist in Fig. 2 dargestellt. Es handelt sich hierbei um eine Zwillingsanlage, die zwei (oder mehr) Hebeeinrichtungen 3, 3' aufweist und die von einer gemeinsamen Steuerung 8 sowie Verdichteranlage 6 betrieben sind. Die Hebeeinrichtungen 3, 3' können beabstandet voneinander angeordnet sein, beispielsweise eine für die bugseitigen und eine für die heckseitigen Laderäume des Schiffs 1. Der Aufbau der einzelnen Hebeeinrichtungen 3, 3' ist wie in Bezug auf die in Fig. 3 dargestellte Ausführungsform und braucht daher nicht weiter erläutert zu werden. Die Steuerung 8 weist ein Pendelbetriebsmodul 89 auf. Daran angeschlossen ist eine Umschalteinrichtung 7, welche die Zufuhr des Guts zu den einzelnen Hebeeinrichtungen 3, 3' und den Abtransport über die Abtransportleitung 4 steuert. Dabei wirkt die Steuerung 8 mit dem Pendelbetriebsmodul 89 so mit der Umschalteinrichtung 7 zusammen, dass eine der Hebeeinrichtungen 3 mit dem Gut aus den Lagerbunkern 10, 10' befülllt wird, während die andere der Hebeeinrichtungen 3' das bereits in ihrem Druckgefäß befindliche Gut über die Abtransportleitung 4 abfördert. Die eine Hebeeinrichtung 3 befindet sich also im Füllungsbetrieb und die andere 3' im Abförderbetrieb. Sind die Hebeeinrichtungen 3, 3' mit Gut befüllt bzw. ist das Gut daraus abgefördert, wird umgeschaltet und die nun befüllte Hebeeinrichtung 3 wechselt in den Abförderbetrieb und die nun entleerte Hebeeinrichtung 3' wird im Füllungsbetrieb erneut mit Gut beschickt.

Die Umschalteinrichtung 7 kann in Komponenten 71, 72, 72' gegliedert sein, welche den Zufluss von Gut aus den Lagerbunkern 10, 10' umschaltet nach Art eines Wechselventils und entsprechend auch die Abförderenden 52 abwechselnd mit der gemeinsamen Abtransportleitung 4 verbindet. Es kann aber auch vorgesehen sein, diese Funktionalität vollständig in die Steuerung 8 mit ihrem Pendelbetriebsmodul 89 zu integrieren, wobei die ohnehin vorhanden Ventile V1a, 1b zum Freigeben bzw. Sperren der Zufuhr von Gut aus den Lagerbunkern 10, 10' bzw. das Ventil V8 an jeder Hebeeinrichtung zum Sperren bzw. Freigeben der Abtransportleitung 4 verwendet werden. Diese Variante bietet den Vorzug, dass sie - bis auf die zweite Hebeeinrichtung - keine zusätzliche Hardware benötigt und damit sowohl kostengünstig wie auch betriebssicher ist.

## Patentansprüche

1. Entladevorrichtung für tiefliegende Lagerbunker mit einer Zufuhrkammer (30) zur bodennahen Zuführung von Gut aus Lagerbunkern (10, 10') und einer Hebeeinrichtung (3) zum Heben des Guts auf ein Hochniveau mit einem Abförderende (52), an das eine Abtransportleitung (4) zum Wegfördern des Guts zu einer räumlich entfernten Abgabestelle (48) anschließbar ist,
**dadurch gekennzeichnet, dass**
die Hebeeinrichtung (3) ein Druckgefäß (33) mit darin angeordnetem Vertikalförderer (31) und Abtransportrohr (51) umfasst, wobei der Vertikalförderer (31) in der Zufuhrkammer (30) beginnt und im oberen Bereich des Druckgefäßes (33)endet, und das Ausschubrohr (51) im unteren Bereich des Druckgefäßes (33) beginnt und aus dem Druckgefäß (33) führt, und eine Bespannungseinrichtung (6) vorgesehen ist, die über ein erstes Ventil (V6) das Druckgefäß (33) mit Druck beaufschlagt und über ein zweites Ventil (V2) eine Förderluftdüse (53) des Ausschubrohrs (51) betätigt, und weiter eine Steuerung (8) vorgesehen ist, die dazu ausgebildet ist, das Druckgefäß (33) mittels des Vertikalförderers (31) zu befüllen und mittels der Bespannungseinrichtung (6) das Gut zu fluidisieren und über die Abtransportleitung (4) wegzufördern.

2. Entladevorrichtung nach Anspruch 1,
**dadurch gekennzeichnet, dass**
der Vertikalförderer (31) mit einer Trennwand im Innenraum des Druckgefäßes (33) abgeteilt ist.

3. Entladevorrichtung nach Anspruch 1 oder 2,
**dadurch gekennzeichnet, dass**
der Vertikalförderer (31) als eine Förderschnecke (32) mit vertikal ausgerichteter Achse ausgeführt ist.

4. Entladevorrichtung nach Anspruch 1 oder 2,
**dadurch gekennzeichnet, dass**
der Vertikalförderer als ein Airlift (32') mit Vertikalstromrohr (37) und darunter angeordneter Füllluftdüse (39) ausgeführt ist.

5. Entladevorrichtung nach einem der vorangehenden Ansprüche,
**dadurch gekennzeichnet, dass**
das Druckgefäß (33) einen Fluidisierboden (38) aufweist.

6. Entladevorrichtung nach einem der vorangehenden Ansprüche,
**dadurch gekennzeichnet, dass**
die Steuerung (8) für einen chargenweisen Betrieb ausgebildet ist.

7. Entladevorrichtung nach einem der Ansprüche 1 bis 5,
**dadurch gekennzeichnet, dass**
die Steuerung (8) für einen kontinuierlichen Betrieb ausgebildet ist.

8. Entladevorrichtung nach einem der vorangehende Ansprüche,
**dadurch gekennzeichnet, dass**
sie als Mehrfachanlage mit mindestens einer weiteren Hebeeinrichtung (3') und einer gemeinsamen Abtransportleitung (4) ausgebildet ist, wobei eine Umschalteinheit (7) vorgesehen ist, die mit der Steuerung (8) derart zusammenwirkt, dass eine der Hebeeinrichtungen (3) mit dem Gut befüllt wird während aus der anderen (3') das Gut abgefördert wird.

## Claims

1. Unloading apparatus for low-lying storage bunkers, comprising a feed chamber (30) for the bottom-level feeding of material from storage bunkers (10, 10') and a lifting device (3) for lifting the material to a high level with a delivery end (52), to which a transport line (4) for conveying the material away to a spatially remote delivery point (48) can be connected,
**characterized in that**
the lifting device (3) comprises a pressure vessel (33) having a vertical conveyor (31) arranged therein and a discharge pipe (51), the vertical conveyor (31) beginning in the feed chamber (30) and ending in the top region of the pressure vessel (33), and the discharge pipe (51) beginning in the bottom region of the pressure vessel (33) and leading out of the pressure vessel (33), and a pressurizing device (6) is provided which pressurizes the pressure vessel (33) via a first valve (V6) and activates a conveying air nozzle (53) of the discharge pipe (51) via a second valve (V2), and furthermore a controller (8) is provided which is designed for filling the pressure vessel (33) by means of the vertical conveyor (31) and for fluidizing the material by means of the pressurizing device (6) and for conveying said material away via the transport line (4).

2. Unloading apparatus according to Claim 1,
**characterized in that**
the vertical conveyor (31) is separated in the interior space of the pressure vessel (33) by a dividing wall.

3. Unloading apparatus according to Claim 1 or 2,
**characterized in that**
the vertical conveyor (31) is designed as a conveying worm (32) with vertically oriented axis.

4. Unloading apparatus according to Claim 1 or 2,
**characterized in that**
the vertical conveyor is designed as an airlift (32') having a vertical flow pipe (37) and a filling air nozzle (39) arranged underneath.

5. Unloading apparatus according to one of the preceding claims,
**characterized in that**
the pressure vessel (33) has a fluidizing bottom (38).

6. Unloading apparatus according to one of the preceding claims,
**characterized in that**
the controller (8) is designed for batch operation.

7. Unloading apparatus according to one of Claims 1 to 5,
**characterized in that**
the controller (8) is designed for continuous operation.

8. Unloading apparatus according to one of the preceding claims,
**characterized in that**
it is designed as a multiple plant having at least one further lifting device (3') and a common transport line (4), a changeover unit (7) being provided which interacts with the controller (8) in such a way that one of the lifting devices (3) is filled with the material, while the material is delivered from the other (3').

## Revendications

1. Dispositif de déchargement pour réservoirs de stockage en profondeur, comprenant un compartiment d'amenée (30) pour l'amenée à proximité du sol de matériaux issus de réservoirs de stockage (10, 10'), et un équipement de levage (3) pour soulever les matériaux jusqu'à un niveau supérieur, avec une extrémité aval (52) à laquelle on peut raccorder une conduite d'enlèvement (4) pour évacuer les matériaux vers un poste de distribution (48) éloigné spatialement,
**caractérisé en ce que**
l'équipement de levage (3) comprend un récipient de pression (33) avec un dispositif de transport vertical (31) et un tuyau d'enlèvement (51) disposés dans celui-ci, dans lequel le dispositif de transport vertical (31) commence dans le compartiment d'amenée (30) et se termine dans la zone supérieure du récipient de pression (33), et le tuyau de refoulement (51) commence dans la zone inférieure du récipient de pression (33) et sort du récipient de pression (33), **en ce qu'**un équipement de mise sous contrainte (6) est prévu pour mettre en pression le récipient de pression (33) par l'intermédiaire d'une première vanne (V6) et pour actionner une buse d'air de transport (53) du tuyau de refoulement (51) par l'intermédiaire d'une deuxième vanne (V2), et **en ce qu'**en outre, un dispositif de commande (8) est prévu, étant réalisé pour remplir le récipient de pression (33) au moyen du dispositif de transport vertical (31) et pour fluidiser les matériaux au moyen de l'équipement de mise sous contrainte (6) et les évacuer par l'intermédiaire de la conduite d'enlèvement (4).

2. Dispositif de déchargement selon la revendication 1,
**caractérisé en ce que**
le dispositif de transport vertical (31) est divisé par une cloison de séparation à l'intérieur du récipient de pression (33).

3. Dispositif de déchargement selon la revendication 1 ou 2,
**caractérisé en ce que**
le dispositif de transport vertical (31) est réalisé sous forme de transporteur à vis sans fin (32) comportant un axe d'orientation verticale.

4. Dispositif de déchargement selon la revendication 1 ou 2,
**caractérisé en ce que**
le dispositif de transport vertical est réalisé sous forme de remontée pneumatique (32') avec un tuyau d'écoulement vertical (37) et une buse d'air de remplissage (39) disposée au-dessous de celui-ci.

5. Dispositif de déchargement selon l'une quelconque des revendications précédentes,
**caractérisé en ce que**
le récipient de pression (33) présente un lit fluidisé (38).

6. Dispositif de déchargement selon l'une quelconque des revendications précédentes,
**caractérisé en ce que**
le dispositif de commande (8) est réalisé pour un fonctionnement en discontinu.

7. Dispositif de déchargement selon l'une quelconque des revendications 1 à 5,
**caractérisé en ce que**
le dispositif de commande (8) est réalisé pour un fonctionnement en continu.

8. Dispositif de déchargement selon l'une quelconque des revendications précédentes,
**caractérisé en ce**
**qu'**il est réalisé sous la forme d'une installation multiple avec au moins un autre équipement de levage (3') et une conduite d'enlèvement (4) commune, dans lequel une unité de commutation (7) est prévue pour coopérer avec le dispositif de commande (8) de telle sorte que l'un des équipements de levage (3) soit rempli des matériaux, tandis que les matériaux sont évacués de l'autre équipement de levage (3').
